# EUROPÄISCHE PATENTSCHRIFT

(11) **EP 2 594 365 B1**
(45) Veröffentlichungstag und Bekanntmachung des Hinweises auf die Patenterteilung: **19.02.2014**
(21) Anmeldenummer: 11189224.6
(22) Anmeldetag: 15.11.2011
(51) Int. Cl.: B24B 31/00

(54) **Verfahren zur Ermittlung eines Strömungsverhaltens eines Mediums**
Method for determining flow behaviour of a medium
Procédé d'établissement d'un comportement en écoulement d'un fluide

(43) Veröffentlichungstag der Anmeldung: 22.05.2013
(73) Patentinhaber: Rolls-Royce Deutschland Ltd & Co KG, 15827 Blankenfelde-Mahlow (DE); Rolls-Royce plc, London SW1E 6AT (GB)
(72) Erfinder: Feldmann, Goetz G.,Dr., 61440 Oberursel (DE); Chan, Kelvin Hau-Kong, 550524 Singapore (SG)

(56) Entgegenhaltungen:
- EP-A1- 1 852 219
- EP-A2- 1 186 377
- GB-A- 1 385 833

## Beschreibung

Die Erfindung betrifft ein Verfahren zur Ermittlung eines Strömungsverhaltens eines Mediums mit wenigstens einer in das Medium eingebrachten Analyseeinrichtung gemäß der im Oberbegriff des Patentanspruches 1 näher definierten Art.

Aus der Praxis sind vielfältige Verfahren zur Behandlung einer Oberfläche eines Bauteils bekannt, wobei hierfür insbesondere ein Gleitschleifen, ein Tauchschleifen oder ein Kugeldruckpolieren zum Einsatz kommt. Das jeweilige Bauteil wird bei den bekannten Verfahren zusammen mit einem Bearbeitungsmedium in einen Behälter, beispielsweise in eine Trommel oder einen Trog gegeben, wobei das Medium, welches insbesondere eine Vielzahl von kugelförmigen metallischen Festkörpern aufweist, durch eine Rotation der Trommel relativ zu dem fest mit der Trommel verbundenen Bauteil in Bewegung versetzt wird. Durch diese Relativbewegung des Mediums gegenüber dem Bauteil wird die Oberfläche des Bauteils durch die einzelnen Festkörper bearbeitet.

Um durch die Bearbeitung einen gewünschten Oberflächenzustand des Bauteils zu erzielen, ist es wichtig, ein Strömungsverhalten des Mediums während des Oberflächenbearbeitungsvorgangs möglichst genau zu kennen. Bekannterweise wird in einem sehr zeitaufwändigen empirischen Verfahren die Oberflächenbearbeitung des Bauteils mit variierenden Verfahrensparametern durchgeführt und überprüft, ob ein Zustand der Oberfläche des Bauteils nach der Bearbeitung den gewünschten Anforderungen entspricht. Ist dies nicht der Fall, werden Verfahrensparameter verändert und das Bearbeitungsergebnis erneut beurteilt.

Da ein Strömungsverhalten des Mediums insbesondere bei komplexen Bauteilen schwer zu simulieren ist, werden optische Aufnahmesysteme eingesetzt, um zur Erzielung einer gewünschten Oberflächenbeschaffenheit des Bauteils erforderliche Verfahrensparameter einfacher und schneller zu ermitteln und ein Strömungsverhalten des Mediums besser zu verstehen. Mit den visuellen Verfahren ist das Strömungsverhalten zwar in Bereichen ermittelbar, in welchen Teilchen des Mediums sich nach unten unter eine sichtbare Oberfläche des Mediums oder nach oben an die Oberfläche des Mediums bewegen. Allerdings ist ein Strömungsverhalten des Mediums unterhalb der sichtbaren Oberfläche des Mediums aus diesen Daten nur bis zu geringen Tiefen schätzbar und eine Bewegung des Mediums in tieferen Bereichen nicht ermittelbar.

Zur weiter vereinfachten Ermittlung des Strömungsverhaltens des Mediums ist es bekannt, das Medium während des Oberflächenbearbeitungsvorgangs farblich einzufärben. Eine Bewegungsrichtung und eine Geschwindigkeit des Mediums während des Oberflächenbearbeitungsvorgangs kann auf diese Weise einfacher ermittelt werden und es können gegebenenfalls genauere Erkenntnisse über das Strömungsverhalten des Mediums gewonnen werden.

Weiterhin ist es bekannt, eine Art Anker in das Medium einzubringen, um aus der durch eine Videokamera aufgezeichneten Bewegung des Ankers bzw. der an dem Anker angebrachten Verbindung zur Ausgangsposition Rückschlüsse über eine allgemeine Geschwindigkeit und Richtung der Strömung des Mediums zu berechnen.

Quantitative Messergebnisse sind mit diesen Verfahren für das gesamte Strömungsverhalten allerdings nicht erzielbar, so dass das Strömungsverhalten insgesamt nur sehr ungenau ermittelbar ist. Durch den bei letzterem Verfahren verwendeten Anker kann zudem ein durch den Anker beeinflusstes Strömüngsverhalten in Strömungsrichtung vor dem Anker ein Strömungsverhalten stromab des Ankers beeinflussen und die ermittelten Ergebnisse verfälschen.

Ferner sind aus der Praxis Verfahren bekannt, bei welchen Strömungsmesseinrichtungen ortsfest in das Medium eingebracht werden und das Strömungsverhalten des Mediums an dieser Position in der Art eines Windrades ermittelt werden. Über das gesamte Strömungsverhalten kann mit diesen Verfahren nur mit unverhältnismäßig großem Aufwand eine Aussage getroffen werden, wobei das Strömungsverhalten durch die Strömungsmesseinrichtung beeinflusst und das Messergebnis verfälscht werden kann. Weiterhin ist das Strömungsverhalten des Mediums mit diesen Messeinrichtungen nicht in schwer zugänglichen Bereichen ermittelbar, wenn der zur Anordnung der Messeinrichtung benötigte Platz in diesen Bereichen nicht ausreicht.

Die GB 1 385 833 zeigt ein Verfahren zur Positionsbestimmung eines entfernten Objekts, wobei in einer Peilstation erste und zweite uneindeutige Positionssignale besagten Objekts empfangen und daraus erste und zweite uneindeutige Positionsdaten des Objekts berechnet werden. Unter Verwendung des zweiten uneindeutigen Positionssignals wird aus dem ersten uneindeutigen Positionssignal ein erstes eindeutiges Positionssignal gewonnen. Mit Hilfe des ersten eindeutigen positionssignals wird aus dem zweiten uneindeutigen Positionssignal ein zweites eindeutiges Positionssignal gewonnen. Aus den beiden eindeutigen Positionssignalen wird die genaue Position des Objekts bestimmt.

Der vorliegenden Erfindung liegt daher die Aufgabe zugrunde, ein Verfahren zur Ermittlung eines Strömungsverhaltens eines Mediums zur Verfügung zu stellen, mittels welchem ein Strömungsverhalten des Mediums auf einfache Weise genau ermittelt werden kann.

Erfindungsgemäß wird diese Aufgabe mit einem Verfahren mit den Merkmalen des Patentanspruches 1 gelöst.

Es wird somit ein Verfahren zur Ermittlung eines Strömungsverhaltens eines Mediums mit wenigstens einer in das Medium eingebrachten Analyseeinrichtung vorgeschlagen, bei dem erfindungsgemäß vorgesehen ist, dass die wenigstens eine Analyseeinrichtung frei in dem Medium bewegbar ist und wenigstens eine Eigenschaft des Strömungsverhaltens des Mediums charakterisierende Daten an eine Datenauswerteeinrichtung ausgibt, mit der anhand der Daten die wenigstens eine Eigenschaft des Strömungsverhaltens des Mediums in ausgewählten oder sämtlichen Bereichen, welche die wenigstens eine Analyseeinrichtung mit dem Medium durchströmt, ermittelt wird.

Ein Strömungsverhalten des Mediums, welches flüssig, gasförmig oder aus Festkörpern oder einer Mischung hieraus gebildet sein kann, ist mit dem erfindungsgemäßen Verfahren auf einfache Weise sehr genau ermittelbar. Dies resultiert daraus, dass die frei in dem Medium bewegliche wenigstens eine Analyseeinrichtung das Strömungsverhalten des Mediums nicht oder nur gering beeinflusst und die Datenauswertung somit nicht oder im Vergleich zu bekannten Verfahren mit ortsfest angeordneten Analyseeinrichtungen nur geringfügig verfälscht. Zudem ist durch das erfindungsgemäße Verfahren eine Strömung des Mediums auch in nicht sichtbaren und daher mit visuellen Methoden nicht auswertbaren Bereichen, insbesondere bei undurchsichtigen Medien oder nicht visuell zugänglichen Bereichen, möglich. Da sich die wenigstens eine Analyseeinrichtung frei mit dem Medium mitbewegt, kann das Strömungsverhalten des Mediums auch in mit herkömmlichen Messverfahren nicht oder nur schwer zugänglichen Bereichen der Strömung ermittelt werden.

Das erfindungsgemäße Verfahren wird zur Ermittlung eines Strömungsverhaltens eines Mediums bei der Oberflächenbearbeitung von Bauteilen, insbesondere mittels Gleitschleifens, Tauchschleifens, Kugeldruckpolierens oder dergleichen, eingesetzt. Bei derartigen Verfahren kann das Strömungsverhalten des Mediums auch in von außen nicht sichtbaren Bereichen ermittelt werden, z. B. wenn sich das Medium bei diesen Bearbeitungsverfahren in einem abgeschlossenen Behältnis befindet und durch eine Rotation desselben relativ zu dem Bauteil bewegt wird, wobei auch die wenigstens eine Analyseeinrichtung das Bauteil während des Verfahrens vielfach umläuft. Entsprechend durchwandert die Analyseeinrichtung auch bei komplexen Bauteilen, wie beispielsweise Bliskschaufeln auf Einzelscheiben oder Rotoren, Verdichterbauteilen, Turbinenbauteilen, Gehäusen von Luftfahrttriebwerken und Industriegasturbinen, schwer zugängliche Bereiche, in welchen das Strömungsverhalten des jeweils geeigneten Mediums somit auf einfache Weise genau ermittelt werden kann. Neben sortenreinen Schüttungen können auch Mischungen von kugelförmigen, zylinderförmigen, satellitenförmigen Medien und anderen geometrischen Formen aus organischen, polymeren, metallischen und nicht-metallischen Werkstoffen mit und ohne Zusatz von Schleifmittel und oder Flüssigkeit, Verwendung finden.

Bei einer vorteilhaften Ausführung des erfindungsgemäßen Verfahrens ist es vorgesehen, dass die wenigstens eine Analyseeinrichtung eine Ortungseinheit aufweist, mittels welcher eine Position der wenigstens einen Analyseeinrichtung in dem Medium ermittelbar ist und von der Datenauswerteeinrichtung zur Ermittlung wenigstens einer Eigenschaft des Strömungsverhaltens des Mediums ausgewertet wird. Hierbei können beispielsweise bekannte Radio-Frequency-Identification (RFID)-Systeme zum Einsatz kommen, bei denen die wenigstens eine Analyseeinrichtung insbesondere einen Transponder aufweist. Die Position der wenigstens einen Analyseeinrichtung kann dabei sowohl passiv als auch aktiv von der Datenauswerteeinrichtung ermittelt werden.

Bei einem vorteilhaften erfindungsgemäßen Verfahren weist die wenigstens eine Analyseeinrichtung eine Sendeeinheit auf, mittels welcher wenigstens eine Eigenschaft des Strömungsverhaltens des Mediums charakterisierende Daten an eine Empfängereinrichtung übermittelt und von der Datenauswerteeinrichtung zur Ermittlung wenigstens einer Eigenschaft des Strömungsverhaltens des Mediums ausgewertet werden. Die Datenübermittlung zwischen der Sendeeinheit der wenigstens einen Analyseeinrichtung und der Empfängereinrichtung kann mittels sämtlicher bekannten berührungslosen Übertragungsverfahren, wie beispielsweise Bluetooth oder dergleichen arbeiten. Vorteilhaft ist dabei, wenn das Strömungsverhalten des Mediums online bzw. intime durchgeführt wird und hierdurch besonders schnell Rückschlüsse auf das Strömungsverhalten des Mediums gezogen werden können.

Insbesondere bei Umgebungsbedingungen, bei denen ein Sender-Empfänger-System nicht installierbar ist, kann es vorteilhaft sein, wenn die wenigstens eine Analyseeinrichtung wenigstens eine Speichereinheit aufweist, in welcher wenigstens eine Eigenschaft des Strömungsverhaltens des Mediums charakterisierende Daten gespeichert werden und welche von der Datenauswerteeinrichtung zur Ermittlung der wenigstens eine Eigenschaft des Strömungsverhaltens des Mediums, insbesondere nach einem Durchlaufen des Verfahrens, ausgewertet wird.

Vorteilhaft betreffen die die wenigstens eine Eigenschaft des Strömungsverhaltens charakterisierenden Daten eine Position und/oder eine Bewegung und/oder eine Rotation und/oder eine Beschleunigung der Analyseeinrichtung und/oder einen Druck und/oder eine Temperatur im Bereich der wenigstens einen Analyseeinrichtung. Mit insbesondere einer Vielzahl dieser Daten kann das Strömungsverhalten des Mediums besonders genau ermittelt werden.

Die Daten werden bei einer vorteilhaften Ausführung des erfindungsgemäßen Verfahrens mittels wenigstens eines Sensors der wenigstens einen Analyseeinrichtung ermittelt, wobei mit dem wenigstens einen Sensor eine Position und/oder eine Bewegung und/oder eine Rotation und/oder eine Beschleunigung der wenigstens einen Analyseeinrichtung und/oder eine Temperatur und/oder einen Druck im Bereich der wenigstens einen Analyseeinrichtung ermittelt wird. Der Einsatz von Drucksensoren ist besonders vorteilhaft, da der Druck in dem Medium je nach Schutthöhe des Mediums variiert und dies wiederum eine Auswirkung auf einen Materialabtrag und eine Oberflächengüte eines zu bearbeitenden Bauteils hat.

Wenn die wenigstens eine Analyseeinrichtung mehrere Sensoren aufweist, kann eine Vielzahl von die Eigenschaften des Strömungsverhaltens des Mediums charakterisierenden Daten ermittelt werden und das Strömungsverhalten des Mediums sehr genau ermittelt werden.

Um das Strömungsverhalten des Mediums nicht oder nur sehr geringfügig zu beeinflussen, ist die wenigstens eine Analyseeinrichtung im Wesentlichen einer Form und Größe von das Medium bildenden Teilen nachgebildet.

Ein Zeitintervall zwischen Zeitpunkten zu denen das Strömungsverhalten charakterisierende Daten ermittelt werden, wird in vorteilhafter Weise in Abhängigkeit einer Bewegungsgeschwindigkeit des Mediums gewählt.

Das Strömungsverhalten des Mediums kann besonders genau ermittelt werden, wenn in das Medium mehrere, insbesondere eine Vielzahl von Analyseeinrichtungen, eingebracht werden.

Verfahrensparameter, welche zur Erzielung einer gewünschten Oberflächenbeschaffenheit von Bauteilen durch ein Oberflächenbearbeitungsverfahren führen, können besonders schnell ermittelt werden, wenn ein Ergebnis der Datenauswerteeinrichtung bei der Einstellung von Verfahrensparametern eines folgenden Verfahrens verwendet wird.

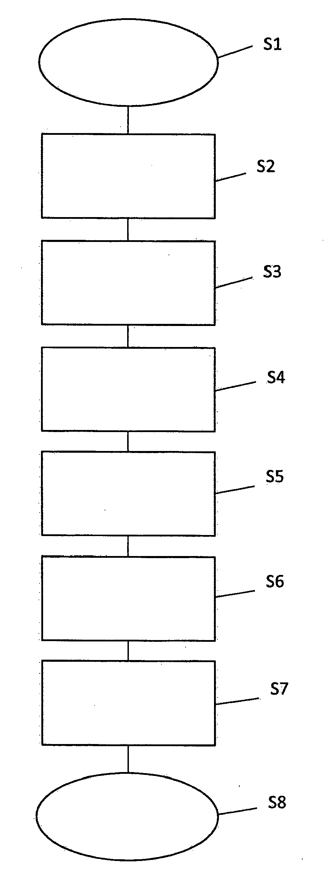

Weitere Vorteile und vorteilhafte Ausführungsformen des erfindungsgemäßen Verfahrens ergeben sich aus den Patentansprüchen und dem nachfolgend unter Bezugnahme auf die Zeichnung prinzipmäßig beschriebenen Ausführungsbeispiel.

Die einzige Figur der Zeichnung zeigt ein stark vereinfachtes Ablaufdiagramm eines erfindungsgemäßen Verfahrens zur Ermittlung eines Strömungsverhaltens eines Mediums mit wenigstens einer in das Medium eingebrachten Analyseeinrichtung am Beispiel eines Kugelpolierverfahrens einer Bliskschaufel eines Gasturbinentriebwerks eines Fluggeräts.

Das erfindungsgemäße Verfahren wird durch einen Startblock S1 eingeleitet. Eine Bliskschaufel eines Gasturbinentriebwerks wird in einem ersten Verfahrensschritt S2 zur Bearbeitung einer Oberfläche der Bliskschaufel in einem Behälter, einer Trommel bzw. einem Trog platziert. In die Trommel werden in einem weiteren Verfahrensschritt S3 zum Kugeldruckpolieren der Oberfläche eine Vielzahl von vorliegend als Kugeln ausgebildete und ein Medium bildende Teilchen eingebracht, welche bei einer durch wenigstens einen Motor angeregten Rotation und/oder Schwingung der Trommel relativ zu dem fest mit der Trommel verbundenen Bauteil bewegt werden. Durch die Relativbewegung der metallischen, nicht-metallischen, polymeren oder organischen Bearbeitungskörper, welche auch stabförmig oder ähnlich ausgebildet sein können, wird die Oberfläche der Bliskschaufel auf an sich bekannter Weise bearbeitet.

Um ein Strömungsverhalten des Mediums während der Oberflächenbearbeitung genau ermitteln zu können und Verfahrens- bzw. Anlagenparameter zur Erzielung eines gewünschten Bearbeitungsergebnisses einstellen zu können, wird in das Medium in einem weiteren Verfahrensschritt S4 eine Vielzahl von Analyseeinrichtungen eingebracht. Die Analyseeinrichtungen weisen bei diesem Beispiel jeweils eine Trägerstruktur mit vorliegend einem darin angeordneten Sechs-Freiheitsgrad-Sensor auf. Die Trägerstruktur weist derartige Materialeigenschaften auf, dass sie einem während des Verfahrens auf sie wirkenden Druck und den dabei vorliegenden Temperaturen sicher standhalten kann und eine Funktionsfähigkeit der Sensoren sicherstellt.

In Form und Gewicht sind die Analyseeinrichtungen hier ebenfalls kugelförmig ausgebildet und entsprechen im Wesentlichen den das Medium bildenden Polierkörpern bzw. Kugeln zur Oberflächenbearbeitung der Bliskschaufel. Bei einer Relativbewegung der Kugeln des Mediums gegenüber der Bliskschaufel wird eine Bewegung der Kugeln des Mediums durch die Analyseeinrichtungen, welche sich frei, d. h. ohne eine Anbindung bzw. ein während des Verfahrens andauerndes Zusammenwirken mit einem anderen Element, in dem Medium bewegen können, nicht oder nur geringfügig beeinflusst.

Die Sensoren der Analyseeinrichtungen, welche z. B. auf einem triaxialen Beschleunigungsmesser und einem triaxialen Gyroskop basieren, messen eine auf die jeweilige Analyseeinrichtung wirkende Beschleunigung und eine Orientierung der Analyseeinrichtung bei deren Bewegung mit dem Medium durch die Trommel. Hierzu weist der triaxiale Beschleunigungssensor insbesondere drei Linearbeschleunigungssensoren auf, welche in den drei Raumachsen zueinander angeordnet sind.

Die von den Sensoren ermittelten Daten werden in einem weiteren Verfahrensschritt S5 vorliegend online bzw. intime über eine hier drahtlos arbeitende Sendeeinheit der Analyseeinrichtung an eine Empfängereinrichtung übermittelt und in einem nachfolgenden Verfahrensschritt S6 zur Datenauswertung an eine Datenauswerteeinrichtung, insbesondere einen Computer, übergeben. Eine Übermittlung der Daten von der Sendeeinheit an die Empfängereinrichtung, welche vorliegend über ein Funkverfahren, wie beispielsweise Bluetooth übertragen wird, kann mittels sämtlicher berührungsloser Übertragungsverfahren durchgeführt werden.

Da die Daten aus jeder Position der Analyseeinrichtungen in der Trommel an die Empfängereinrichtung übermittelt werden können, kann das Strömungsverhalten des Mediums auch in unterhalb einer von außen sichtbaren Oberfläche des Mediums angeordneten Bereichen analysiert und ermittelt werden.

Aus den von der Empfängereinrichtung übergebenen Daten ermittelt die Datenauswerteeinrichtung in bekannter Art und Weise eine Position, Geschwindigkeit, Beschleunigung und Rotationsbewegung der Analyseeinrichtungen in dem Medium. Da die Analyseeinrichtungen das Strömungsverhalten des Mediums nicht oder nur sehr geringfügig beeinflussen, kann die Datenauswerteeinrichtung hieraus in einem weiteren Schritt S7 eine Eigenschaft des Strömungsverhaltens des Mediums an den von den Analyseeinrichtungen durchlaufenen Positionen in dem Medium ermitteln. Ein Strömungsverlauf des Mediums und die Ursachen für diesen Verlauf können somit analysiert werden und Rückschlüsse über den Oberflächenbearbeitungsvorgang der Bliskschaufeln gezogen werden.

Es kann auch vorgesehen sein, dass innerhalb der Trägerstruktur der Analyseeinrichtung weitere Sensoren, wie beispielsweise Drucksensoren oder Temperatursensoren angeordnet sind, um weitere Eigenschaften des Strömungsverhaltens des Mediums zu ermitteln.

Die Sensoren der Analyseeinrichtungen ermitteln die Daten vorliegend etwa alle 0,1 Sekunden. Das gewählte Zeitintervall zwischen zwei gemessenen Datensätzen wird insbesondere in Abhängigkeit der Geschwindigkeit des Mediums in der Trommel und einer gewünschten Genauigkeit der Ermittlung der Strömungsverhaltens des Mediums gewählt und kann von dem vorliegenden Zeitintervall insbesondere bei anderen Anwendungsfällen erheblich abweichen.

Die Übermittlung der Daten von den Sendeeinheiten der Analyseeinrichtungen an die Empfängereinrichtung beginnt insbesondere vor Eingabe der Analyseeinrichtungen in das Medium, so dass eine Position der jeweiligen Analyseeinrichtung in der Trommel ausgehend von einer Referenzposition zu einem späteren Zeitpunkt von der Datenauswerteeinrichtung jeweils ermittelt werden kann.

Durch eine Auswertung der Daten über einen längeren Zeitraum von beispielsweise 15 bis 60 Minuten kann das Strömungsverhalten des Mediums in sämtlichen von den Analyseeinrichtungen durchlaufenen Bereichen ausgewertet werden und hieraus Rückschlüsse auf die Oberflächenbehandlung der Bliskschaufel gezogen werden. Durch die Verwendung einer Vielzahl von Analyseeinrichtungen, beispielsweise zehn bis 50, können sehr genaue Erkenntnisse bezüglich des Strömungsverhaltens des Mediums gewonnen werden. Die einzelnen Analyseeinrichtungen können zu Beginn des Verfahrens in verschiedene Höhen der Trommel in das Medium eingebracht werden.

Der Verfahrensablauf endet anschließend mit dem Beendigungsschritt S8.

Die in dem Verfahren gewonnenen Erkenntnisse können zur Einstellung von Verfahrens- bzw. Anlagenparametern wie beispielsweise einer Frequenz eines Unwuchtmotors zur Anregung bzw. zum Antrieb der Trommel, einer Amplitude der Bewegung der Trommel durch eine Änderung von Gewichten oder dergleichen genutzt werden, um auf schnelle Weise diejenigen Verfahrens- bzw. Anlageparameter zu ermitteln, mittels welchen die Bliskschaufel in sämtlichen Bereichen nach der Oberflächenbehandlung eine gewünschte Oberflächenbeschaffenheit und/oder Verfestigung aufweist. Dies ermöglicht eine bauteilbezogene Optimierung der Verfahrensparameter, die eine kostengünstigere und/oder eine gleichmäßigere und/oder eine zeitoptimierte Behandlung als mit bekannten Verfahren ermöglichen. Mit dem erfindungsgemäßen Verfahren kann eine parameterbezogenen Wirkung des Mediums analysiert werden.

## Patentansprüche

1. Verfahren zur Ermittlung eines Strömungsverhaltens eines Mediums mit wenigstens einer in das Medium eingebrachten Analyseeinrichtung (S4), wobei die wenigstens eine Analyseeinrichtung frei in dem Medium bewegbar ist und wenigstens eine Eigenschaft des Strömungsverhaltens des Mediums charakterisierende Daten an eine Datenauswerteeinrichtung ausgibt (S6), mit der anhand der Daten die wenigstens eine Eigenschaft des Strömungsverhaltens des Mediums in ausgewählten oder sämtlichen Bereichen, welche die wenigstens eine Analyseeinrichtung mit dem Medium durchströmt, ermittelt wird (S7), **dadurch gekennzeichnet, dass** das Medium zur Oberflächenbehandlung von Bauteilen insbesondere in Form eines Gleitschleifens, eines Tauchschleifens oder eines Kugeldruckpolierens, vorgesehen ist.

2. Verfahren nach Anspruch 1, **dadurch gekennzeichnet, dass** die wenigstens eine Analyseeinrichtung eine Ortungseinheit aufweist, mittels welcher eine Position der wenigstens einen Analyseeinrichtung in dem Medium ermittelbar ist und von der Datenauswerteeinrichtung zur Ermittlung wenigstens einer Eigenschaft des Strömungsverhaltens des Mediums ausgewertet wird.

3. Verfahren nach einem der Ansprüche 1 bis 2, **dadurch gekennzeichnet, dass** die wenigstens eine Analyseeinrichtung wenigstens eine Speichereinheit aufweist, in welcher wenigstens eine Eigenschaft des Strömungsverhaltens des Mediums charakterisierende Daten gespeichert werden und welche zu einem späteren Zeitpunkt von der Datenauswerteeinrichtung zur Ermittlung der wenigstens einen Eigenschaft des Strömungsverhaltens des Mediums ausgewertet wird.

4. Verfahren nach einem der Ansprüche 1 bis 3, **dadurch gekennzeichnet, dass** die wenigstens eine Analyseeinrichtung eine Sendeeinheit aufweist, mittels welcher wenigstens eine Eigenschaft des Strömungsverhaltens des Mediums charakterisierende Daten an eine Empfängereinrichtung übermittelt und von der Datenauswerteeinrichtung zur Ermittlung der wenigstens einen Eigenschaft des Strömungsverhaltens des Mediums ausgewertet werden.

5. Verfahren nach einem der Ansprüche 1 bis 4, **dadurch gekennzeichnet, dass** die die wenigstens eine Eigenschaft des Strömungsverhalten charakterisierenden Daten eine Position und/oder eine Bewegung und/oder eine Rotation und/oder eine Beschleunigung der Analyseeinrichtung und/oder einen Druck und/oder eine Temperatur im Bereich der wenigstens einen Analyseeinrichtung betreffen.

6. Verfahren nach einem der Ansprüche 1 bis 5, **dadurch gekennzeichnet, dass** die Daten mittels wenigstens eines Sensors der wenigstens einen Analyseeinrichtung ermittelt werden, wobei mit dem wenigstens einen Sensor eine Position und/oder eine Bewegung und/oder eine Rotation und/oder eine Beschleunigung der wenigstens einen Analyseeinrichtung und/oder eine Temperatur und/oder einen Druck im Bereich der wenigstens Analyseeinrichtung ermittelt wird.

7. Verfahren nach einem der Ansprüche 1 bis 6, **dadurch gekennzeichnet, dass** die wenigstens eine Analyseeinrichtung mehrere Sensoren aufweist.

8. Verfahren nach einem der Ansprüche 1 bis 7, **dadurch gekennzeichnet, dass** die wenigstens eine Analyseeinrichtung im Wesentlichen einer Form und Größe von das Medium bildenden Teilen nachgebildet ist.

9. Verfahren nach einem der Ansprüche 1 bis 8, **dadurch gekennzeichnet, dass** ein Zeitintervall zwischen Zeitpunkten, zu denen die Daten ermittelt werden, in Abhängigkeit einer Bewegungsgeschwindigkeit des Mediums gewählt wird.

10. Verfahren nach einem der Ansprüche 1 bis 9, **dadurch gekennzeichnet, dass** in das Medium mehrere Analyseeinrichtungen eingebracht werden (S4).

11. Verfahren nach einem der Ansprüche 1 bis 10, **dadurch gekennzeichnet, dass** ein Ergebnis der Datenauswerteeinrichtung bei der Einstellung von Verfahrensparametern eines folgenden Verfahrens verwendet wird.

## Claims

1. Method for determining a flow behaviour of a medium having at least one analysis device (S4) placed inside the medium, where the at least one analysis device is freely moveable in the medium and supplies data characterizing at least one property of the medium flow behaviour to a data evaluation device (S6) with which the at least one property of the medium flow behaviour is determined on the basis of said data in selected areas or in all areas through which the at least one analysis device flows with the medium (S7), **characterized in that** the medium for surface treatment of components is provided, in particular, for vibratory grinding, plunge grinding or ball polishing.

2. Method in accordance with Claim 1, **characterized in that** the at least one analysis device has a locating unit by means of which a position of the at least one analysis device inside the medium can be determined and is evaluated by the data evaluation device in order to determine at least one property of the medium flow behaviour.

3. Method in accordance with one of the Claims 1 to 2, **characterized in that** the at least one analysis device has at least one memory unit in which data characterizing at least one property of the medium flow behaviour is stored and which, at a later time, is evaluated by the data evaluation device to determine the at least one property of the medium flow behaviour.

4. Method in accordance with one of the Claims 1 to 3, **characterized in that** the at least one analysis device has a transmitter unit by means of which data characterizing at least one property of the medium flow behaviour is transmitted to a receiver device and evaluated by the data evaluation device to determine the at least one property of the medium flow behaviour.

5. Method in accordance with one of the Claims 1 to 4, **characterized in that** the data characterizing the at least one property of the flow behaviour relates to one position and/ or one movement and/ or one rotation and/ or one acceleration of the analysis device and/ or one pressure and/ or one temperature in the area of the at least one analysis device.

6. Method in accordance with one of the Claims 1 to 5, **characterized in that** the data is determined by means of at least one sensor of the at least one analysis device, where one position and/ or one movement and/ or one rotation and/ or one acceleration of the at least one analysis device and/ or one temperature and/ or one pressure in the area of the at least one analysis device is determined using the at least one sensor.

7. Method in accordance with one of the Claims 1 to 6, **characterized in that** the at least one analysis device has several sensors.

8. Method in accordance with one of the Claims 1 to 7, **characterized in that** the at least one analysis device substantially imitates in shape and size the particles forming the medium.

9. Method in accordance with one of the Claims 1 to 8, **characterized in that** a time interval between times when data is determined is selected depending on a movement velocity of the medium.

10. Method in accordance with one of the Claims 1 to 9, **characterized in that** several analysis devices are placed inside the medium (S4).

11. Method in accordance with one of the Claims 1 to 10, **characterized in that** a result from the data evaluation device is used for setting process parameters of a following method.

## Revendications

1. Procédé destiné à déterminer un régime d'écoulement d'un fluide avec au moins un dispositif d'analyse (S4) placé dans le fluide, sachant que l'au moins un dispositif d'analyse peut se déplacer librement dans le fluide et transmet des données caractérisant au moins une propriété du régime d'écoulement du fluide à un dispositif d'exploitation de données (S6), avec lequel est déterminé (S7) à l'aide des données l'au moins une propriété du régime d'écoulement du fluide dans des zones sélectionnées ou toutes les zones que l'au moins un dispositif d'analyse traverse avec le fluide, **caractérisé en ce que** le fluide est prévu pour le traitement de la surface de composants en particulier sous forme d'un ponçage par ponceuse vibrante, d'une rectification en plongée ou d'un polissage à billes sous pression.

2. Procédé selon la revendication n° 1, **caractérisé en ce que** l'au moins un dispositif d'analyse présente une unité de repérage au moyen de laquelle une position de l'au moins un dispositif d'analyse peut être déterminée dans le fluide et est analysée par le dispositif d'exploitation de données pour déterminer au moins une propriété du régime d'écoulement du fluide.

3. Procédé selon une des revendications n° 1 à n° 2, **caractérisé en ce que** l'au moins un dispositif d'analyse présente au moins une unité de mémoire dans laquelle sont enregistrées des données caractérisant au moins une propriété du régime d'écoulement du fluide, et qui est analysée ultérieurement par le dispositif d'exploitation de données pour déterminer l'au moins une propriété du régime d'écoulement du fluide.

4. Procédé selon une des revendications n° 1 à n° 3, **caractérisé en ce que** l'au moins un dispositif d'analyse présente une unité émettrice au moyen de laquelle des données caractérisant au moins une propriété du régime d'écoulement du fluide sont transmises à un dispositif récepteur et sont analysées par le dispositif d'exploitation de données pour déterminer l'au moins une propriété du régime d'écoulement du fluide.

5. Procédé selon une des revendications n° 1 à n° 4, **caractérisé en ce que** les données caractérisant au moins une propriété du régime d'écoulement concernent une position et/ ou un déplacement et/ ou une rotation et/ ou une accélération du dispositif d'analyse, et/ ou une pression et/ ou une température dans la zone de l'au moins un dispositif d'analyse.

6. Procédé selon une des revendications n° 1 à n° 5, **caractérisé en ce que** les données sont saisies au moyen d'au moins un capteur de l'au moins un dispositif d'analyse, sachant qu'avec l'au moins un capteur est déterminé une position et/ ou un déplacement et/ ou une rotation et/ ou une accélération de l'au moins un dispositif d'analyse, et/ ou une température et/ ou une pression dans la zone de l'au moins un dispositif d'analyse.

7. Procédé selon une des revendications n° 1 à n° 6, **caractérisé en ce que** l'au moins un dispositif d'analyse est pourvu de plusieurs capteurs.

8. Procédé selon une des revendications n° 1 à n° 7, **caractérisé en ce que** l'au moins un dispositif d'analyse imite pour l'essentiel en forme et en taille les éléments constituant le fluide.

9. Procédé selon une des revendications n° 1 à n° 8, **caractérisé en ce qu'**un intervalle de temps entre les instants où les données sont saisies est choisi en fonction de la vitesse de déplacement du fluide.

10. Procédé selon une des revendications n° 1 à n° 9, **caractérisé en ce que** plusieurs dispositifs d'analyse sont placés dans le fluide (S4).

11. Procédé selon une des revendications n° 1 à n° 10, **caractérisé en ce qu'**un résultat du dispositif d'exploitation de données est utilisé lors du réglage de paramètres d'un procédé suivant.
